# EUROPÄISCHE PATENTSCHRIFT

(11) **EP 3 541 630 B1**
(45) Veröffentlichungstag und Bekanntmachung des Hinweises auf die Patenterteilung: **25.09.2024**
(21) Anmeldenummer: 17798100.8
(22) Anmeldetag: 13.11.2017
(51) Int. Cl.: B42D 25/29, G02B 5/18, B42D 25/351, B42D 25/328

(54) **SICHERHEITSELEMENT MIT SUBWELLENLÄNGENGITTER**
SECURITY ELEMENT HAVING A SUBWAVELENGTH GRATING
ÉLÉMENT DE SÉCURITÉ MUNI D'UN RÉSEAU SUB-LONGUEUR D'ONDE

(30) Priorität: 16.11.2016 DE 102016013690
(43) Veröffentlichungstag der Anmeldung: 25.09.2019
(73) Patentinhaber: Giesecke+Devrient Currency Technology GmbH, 81677 München (DE)
(72) Erfinder: LOCHBIHLER, Hans, 80337 München (DE)
(74) Vertreter: Patentanwälte Geyer, Fehners & Partner mbB
(86) Internationale Anmeldenummer: PCT/EP2017/001324
(87) Internationale Veröffentlichungsnummer: WO 2018/091135

(56) Entgegenhaltungen:
- DE-A1- 102009 056 933
- DE-A1- 102011 115 589
- DE-A1- 102014 010 751
- US-A1- 2010 304 053
- ANONYMOUS: "Depolarizer (optics) - Wikipedia", 3 November 2016 (2016-11-03), XP055448741, Retrieved from the Internet <URL:https://en.wikipedia.org/w/index.php?title=Depolarizer_(optics)&oldid=747703088> [retrieved on 20180207]

## Beschreibung

Die Erfindung betrifft ein Sicherheitselement zur Herstellung von Wertdokumenten, wie Banknoten, Schecks oder dergleichen, das ein dielektrisches Substrat und zwei Strukturen aufweist, die in Transmissionsbetrachtung von Vorder- und Rückseite verschiedene Polarisationseffekte im sichtbaren Spektralbereich erzeugen.

Die US 2010/0304053 A1 betrifft ein solches Sicherheitselement. Es weist ein Schichtsystem mit zwei, in unterschiedliche Richtungen linear polarisierenden Flüssigkristallschichten und einer dazwischen liegenden, die Polarisation beeinflussenden Polymerschicht auf. Dies wird genutzt, um mittel Polarisationseffekten in Transmission eine Nicht-Reziprozität zu erreichen. Durch Polarisationseffekte unterschiedliche Motive in Transmission von der Vorder- und Rückseite zu zeigen, realisieren auch die beispielsweise unter www.alise-devices.com angebotene Strukturen. Sie basieren auf einer dünnen Schicht von Flüssigkristallen, welche so ausgerichtet sind, dass bezüglich der Transmission eine Nicht-Reziprozität vorliegt. Diese Strukturen sind jedoch in ihrer Herstellung relativ aufwendig und eignen sich kaum für eine kostengünstige Massenproduktion von Sicherheitselementen.

Es sind weiter Sicherheitselemente mit periodischen Liniengittern bekannt, beispielsweise aus der DE 10 2009 012299 A1, DE 10 2009 012300 A1, DE 10 2011 115589 A1, DE 10 2014 010751 A1 oder der DE 10 2009 056933 A1. Die Strukturen haben einen stark polarisierenden Einfluss auf die Reflexion bzw. die Transmission eines einfallenden Lichtstrahls, und können so für die Erzeugung eines Polarisationseffektes in einem Sicherheitselement verwendet werden. Es ist dazu ein Liniengitter mit Subwellenlängenstrukturen bekannt. Das Liniengitter besitzt ein Rechteckprofil aus einem dielektrischen Material.

Die waagrechten Flächen sind mit einem hochbrechenden Dielektrikum überzogen. Oberhalb dieser Struktur befindet sich ebenfalls ein dielektrisches Material, wobei bevorzugterweise die Brechungsindizes des Gittersubstrats und des Deckmaterials identisch sind. Dadurch ist eine optisch wirksame Struktur ausgebildet, die aus zwei Gittern aus dem hochbrechenden Material besteht, welche durch die Höhe des ursprünglichen Rechteckprofils beabstandet sind. Die das Liniengitter bildenden Gitterstege sind beispielsweise aus Zinksulfid (ZnS).

Die WO 2012/019226 A1 beschreibt geprägte Subwellenlängengitter ebenfalls mit einem Rechteckprofil, auf dessen Plateaus Metallpartikel bzw. metallische Nanopartikel aufgedruckt sind. Dieses Gitter zeigt Farb- bzw. Polarisationseffekte in Transmission.

Bekannt ist somit eine Subwellenlängenstruktur mit einer ca. 70 nm dicken ZnS Beschichtung. Auch diese Strukturen eignen sich als Filter in Reflexion. Daher muss die Struktur zusätzlich auf einen Licht absorbierenden Untergrund aufgebracht werden, um einen hinreichenden Farbkontrast zu erzielen, der dann in Reflexion sichtbar ist. Subwellengitter mit metallischen Beschichtungen zeigen eine relativ hohe Farbsättigung in Transmission. Aufgrund der Lichtabsorption im Metall erscheinen sie deshalb relativ dunkel.

Mit einem dünnen Metallfilm überzogene Sinusgitter können plasmonische Resonanzeffekte hervorrufen. Diese Resonanzen führen zu einer erhöhten Transmission in TM-Polarisation, vgl. Y. Jourlin et al. "Spatially and polarization resolved plasmon mediated transmission through continuous metal films"; Opt. Express 17, 12155-12166 (2009). Dieser Effekt kann durch eine zusätzliche dünne dielektrische Schicht noch optimiert werden, wie T. Tenev et al., "High Plasmonic Resonant Reflection and Transmission at Continuous Metal Films on Undulated Photosensitive Polymer", Plasmonics (2013). Das in WO 2012/136777 A1 beschriebene Sicherheitselement basiert auf diesem optischen Effekt.

Der Erfindung liegt deshalb die Aufgabe zugrunde, ein massenproduzierbares Sicherheitselement zu schaffen, das in Transmission einen dispersiven Polarisationseffekt zeigt, welcher sich beim Betrachten von Vorder- und Rückseite unterscheidet.

Die Erfindung ist in den Ansprüchen 1, 12 und 13 definiert. Es werden zwei übereinander angeordnete Gitterstrukturen verwendet, die in einer Raumrichtung periodisch sind. Es sind Liniengitterstrukturen. Die Periode beträgt unter 450 nm. Dadurch sind die Gitterstrukturen als Subwellenlängengitter zu charakterisieren und im Ergebnis halbtransparent. Jede Gitterstruktur erzeugt einen Polarisationseffekt, der sich als Polarisationsfilterung auswirkt, welche dispersiv, also wellenlängenabhängig ist. Bei polarisierter Beleuchtung erzeugt die Wellenabhängigkeit des Polarisationsfilters eine Farbfilterung, die von der Ausrichtung der Gitterstrukturen abhängt. Auf diese Weise können einfach farbige Muster erzeugt werden.

Zwischen den polarisationsfilternden Gitterstrukturen befindet sich eine Zwischenschicht aus einem transparenten Medium, das entweder depolarisierende Wirkung hat oder als Lambda/4-Schicht ausgebildet ist. Diese Zwischenschicht hat zur Folge, dass der Farbeffekt, welcher durch die Polarisationsfilterung erzeugt wird, nur an derjenigen Gitterstruktur auftritt, welche bezogen auf die Zwischenschicht der polarisierten Beleuchtungsquelle zugewandt ist. Man erreicht damit eine Nicht-Reziprozität in der Transmission, da die Gitterstruktur, welche auf der der Beleuchtungsquelle abgewandten Seite der Zwischenschicht liegt, entweder mit depolarisierter Beleuchtung oder mit zirkular polarisierter Beleuchtung beaufschlagt wird und dann keinen polarisationsfilternden Effekt und letztlich auch keinen Farbeffekt mehr bewirkt. Der Betrachter sieht somit in Transmission das Motiv, das durch den polarisationsfilternden Effekt derjenigen Gitterstruktur erzeugt wird, welche auf der ihm abgewandten Seite der Zwischenschicht liegt. Die andere Gitterstruktur wirkt sich für ihn nicht aus. Dreht er das Sicherheitselement um, sieht er den Effekt der anderen Schicht.

Eine Lambda/4-Wirkung kann streng genommen nur für eine einzige Wellenlänge auftreten. Im Falle eines menschlichen Betrachters ist der Wellenlängenbereich von 380 nm bis 780 nm relevant. Die Lambda/4-Eigenschaft kann somit auch nur für eine Schwerpunktlänge gegeben sein.

Polarisierte Beleuchtungsquellen können LCD-Bildschirme sein. Eine typische Situation ist es, dass die Transmission eines Sicherheitselementes bei senkrechtem Lichteinfall betrachtet wird.

In einer besonders einfach zu fertigenden Ausführungsform sind die Gitterstrukturen jeweils als einfache Liniengitter mit unterschiedlichen Parametern ausgebildet. Die Liniengitter sind als Drahtgitter aufzufassen und die unterschiedlichen Parameter können die Geometrie der Drähte bzw. Stege (beispielsweise deren Höhe), das Tastverhältnis des Gitters, das Aspektverhältnis der Stege oder Materialkonstanten bzw. Brechzahlen betreffen.

In anderen Ausführungsformen wird/werden für eine oder beide Gitterstrukturen eine Doppelgitterstruktur verwendet, die aus in zwei Ebenen übereinanderliegenden, komplementär zueinander aufgebauten, d.h. gegeneinander verschobenen Liniengitterstrukturen besteht. Eine Phasenverschiebung von 90° ist der Idealwert, welcher natürlich im Rahmen der Fertigungsgenauigkeit zu sehen ist. Durch Fertigungstoleranzen können hier Abweichungen von der Komplementarität, also 90° Phasenverschiebung, entstehen, da in der Regel ein Rechteckprofil nicht perfekt ausgebildet, sondern nur durch ein Trapezprofil angenähert werden kann, dessen obere Parallelkante kürzer ist als die untere. Bei einer periodischen Liniengitterstruktur entspricht die Phasenverschiebung einer halben Periode. Ein derart aufgebautes Gitter hat in Transmissionsbetrachtung einen reproduzierbaren und gut wahrnehmbaren Polarisationseffekt.

Die Liniengitterstrukturen dieser Ausführungsformen sind aus metallischem, hochbrechendem, dielektrischem oder halbmetallischem Material. Die Dicke der Gitterstege ist geringer als die Modulationstiefe, also als der Abstand der Gitterebenen der Liniengitterstrukturen. Die Doppelgitterstrukturen können einfach durch einen Schichtaufbau hergestellt werden, indem zuerst eine Grundschicht bereitgestellt wird, auf der die erste Liniengitterstruktur ausgebildet wird. Darauf bringt man eine dielektrische Zwischenschicht auf, die die erste Liniengitterstruktur überdeckt und optional dicker als die Gitterstege der ersten Liniengitterstruktur ist. Darauf kann dann die verschobene zweite Liniengitterstruktur ausgebildet werden und eine dielektrische Deckschicht bildet eine Zwischenlage zur dritten und vierten Liniengitterstruktur der zweiten Doppelgitterstruktur. Alternativ kann für jede Doppelgitterstruktur auch in dem dielektrischen Substrat zuerst ein Subwellengitter ausgebildet werden, das ein Rechteckprofil im Querschnitt hat. Bedampft man dieses mit dem metallischen oder hochbrechenden Material senkrecht, entsteht eine Schicht auf den Plateaus und in den Gräben, welche die ersten und zweiten Gitterstege bildet. Man hat damit die gewünschten der ersten und zweiten Gitterstege in unterschiedlichen Ebenen. Sie sind zusammenhängend, wenn die Dicke der Gitterstege größer ist als die Modulationstiefe des Rechteckprofils des zuvor strukturierten dielektrischen Substrates. Eine besonders gute Polarisationsfilterung erhält man, wenn der vertikale Abstand zwischen den ersten/ dritten und den zweiten/vierten Gitterstegen, also die Modulationstiefe der jeweiligen Struktur, zwischen 100 nm und 500 nm liegt. Zur Abstandsmessung dienen die beiden Ebenen, die z.B. durch gleichweisende Flächen der ersten und zweiten Liniengitterstruktur definiert werden können, d.h. beispielsweise von der Unterseite der Gitterstege oder der Oberseite der Gitterstege. Der vertikale Abstand ist dabei selbstverständlich senkrecht zu der parallelen Ebene zu messen, bezeichnet also den Höhenunterschied zwischen gleichgerichteten Flächen der Gitterstege.

Als Material für die Stege der Gitterstruktur kommen alle Materialien infrage, die gegenüber dem sie umgebenden Material eine höhere Brechzahl haben, insbesondere um mind. 0,3 höher, bzw. eine komplexe Brechzahl haben.

Es zeigt sich, dass Subwellenlängengitter mit einer sehr kleinen Periode, die insbesondere kleiner als die halbe maximale Wellenlänge des sichtbaren Spektralbereichs ist, insbesondere kleiner 300 nm oder 200 nm, eine winkelunabhängige Farbfilterung aufweisen. Solche Gitter wirken als effiziente Polarisationsfilter und zeigen kaum mehr Resonanzeffekte im sichtbaren Spektralbereich. Es ist deshalb bevorzugt, dass die Perioden der Gitterstrukturen nicht über 300 nm, bevorzugt nicht über 200 nm betragen.

Das Sicherheitselement mit den zwei Gitterstrukturen zeigt von jeder Seite eine andere Polarisationsfilterung bei Transmissionsbetrachtung. Diese Polarisationsfilterung ist wellenlängenabhängig und kann dazu verwendet werden, um Motive farbig zu gestalten.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Es zeigen:
- Fig. 1a, b: Schemadarstellungen zur Funktionsweise eines Sicherheitselementes mit zwei übereinander angeordneten Gitterstrukturen,
- Fig. 2: eine Schnittdarstellung eines Sicherheitselementes mit zwei Gitterstrukturen in einer ersten Ausführungsform,
- Fig. 3: eine Schnittdarstellung ähnlich der Fig. 2 mit zwei Gitterstrukturen in einer zweiten Ausführungsform,
- Fig. 4a-d: Beispiele für Gitterstrukturen, wie sie für die obere und/oder untere Gitterstruktur der Fig. 2 oder Fig. 3 infrage kommen,
- Fig. 5 und 6: die spektralen Abhängigkeiten der Transmission des Sicherheitselementes der Fig. 2 bzw. 3 für verschiedene Polarisationen der Beleuchtung,
- Fig. 7: Farbwerte im LCh-Farbraum für Transmission des Sicherheitselements der Fig. 2 bei Variation einer Periode,
- Fig. 8: ein CIE-1931-Farbdiagramm für Transmission des Sicherheitselements der Fig. 2,
- Fig. 9: Farbwerte im LCh-Farbraum für Transmission des Sicherheitselements der Fig. 2 bei Variation einer Schichtdicke,
- Fig. 10: ein CIE-1931-Farbdiagramm für Transmission des Sicherheitselements der Fig. 2,
- Fig. 11a-b: Draufsichten auf ein Motiv, das als Sicherheitselement mit Gittern der Fig. 1 bzw. 2 unterschiedlicher Orientierung gebildet ist, und
- Fig. 12: eine Banknote mit dem Sicherheitselement der Fig. 1 oder 2 und einem Prägehologramm.

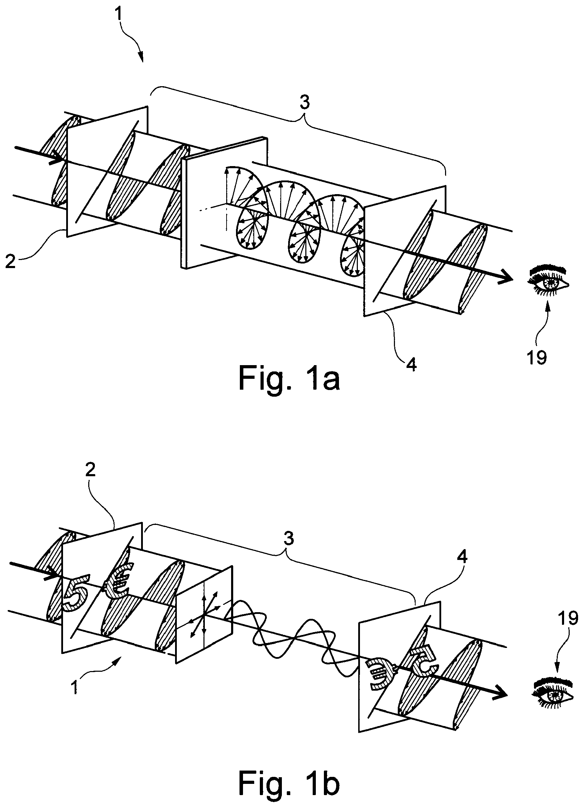

Ein Sicherheitselement 1 umfasst drei Schichtbereiche, ein erstes Subwellenlängengitter, ein dazwischen liegendes Medium und ein zweites Subwellenlängengitter. Fig. 1a zeigt schematisch dieses Sicherheitselement 1 beim Durchtritt polarisierter Strahlung. Das erste Subwellenlängengitter ist eine Gitterstruktur 2 und das zweite Subwellenlängengitter eine Gitterstruktur 4. Das dazwischen liegende Medium ist als transparente Zwischenschicht 3 ausgebildet, das in der perspektivisch aufgefächerten und schematischen Darstellung der Fig. 1a, b vor allem hinsichtlich seiner Funktion eingetragen ist. Jede Gitterstruktur 2, 4 ist längs einer Raumrichtung periodisch, wobei die Raumrichtung bereichsweise variiert, um ein Motiv zu erzeugen. Um eine Nicht-Reziprozität in Transmission T zu erzielen, bewirkt die Zwischenschicht 3 einen λ/4-Effekt (Fig. 1a) oder ist depolarisierend (Fig. 1b).

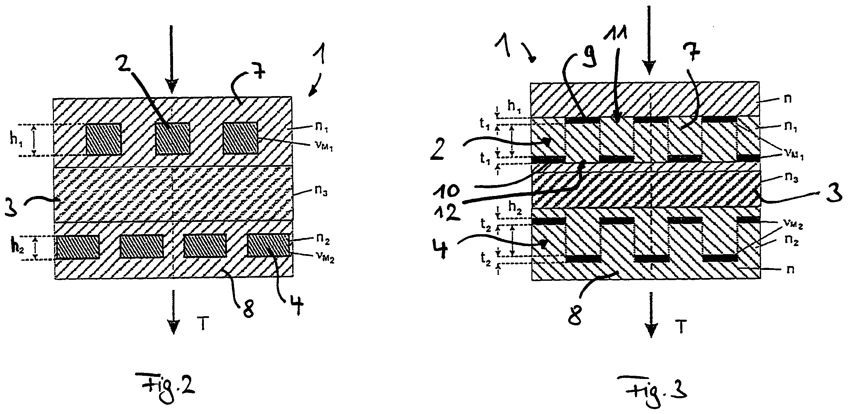

Fig. 2 zeigt schematisch einen Querschnitt durch eine erste Ausführungsform des Sicherheitselements 1, bei dem die Gitterstrukturen 2, 4 als Steg- bzw. Drahtgitter ausgebildet sind, das in dieser Ausführungsform rechteckige Gitterstege hat, die in einem Substrat 7 bzw. 8 eingebettet sind. In der Ausführungsform der Fig. 2 unterscheiden sich die Gitterstrukturen 2, 4 hinsichtlich der geometrischen Abmessungen der Stege und der Brechzahl v_{M1} und v_{M2}; bei Metallen oder Halbmetallen kann die Brechzahl auch komplex sein. Hierdurch besteht ein Brechzahlsprung zur Brechzahl n₁ des umgebenden Substrates 7 bzw. zur Brechzahl n₂ des umgebenden Substrats 8.

Die Gitterstege der Gitterstrukturen 2, 4 unterscheiden sich hinsichtlich geometrischer Parameter, hier exemplarisch bei gleicher Periode im Aspektverhältnis, der Höhe h₁ bzw. h₂, und dem Tastverhältnis der Gitterstruktur 2, 4. In einer bevorzugten Variante sind die Gitter identisch.

Zwischen den Gitterstrukturen 2, 4 befindet sich die depolarisierende oder λ/4-Zwischenschicht 3 mit einer Brechzahl n₃. Die Brechzahlen n₂, n₃ und n₁ können identisch sein. Die Zwischenschicht 3 ist transparent. Die Perioden der Gitterstrukturen 2, 4 sind optional identisch. Sie sind nicht größer als 450 nm, so dass die Gitterstrukturen 2, 4 als Subwellenlängengitter ausgebildet sind.

Die Schnittdarstellung der Fig. 2 und 3 zeigen die Stege der Gitterstrukturen 2, 4 in derselben Richtung verlaufend. Gleichermaßen ist eine Verdrehung der Gitterstrukturen 2, 4 um einen Azimutwinkel Φ möglich.

In einer anderen Ausführungsform sind die Gitterstrukturen 2, 4 als Doppel-Liniengitter ausgebildet. Natürlich ist es auch möglich, nur eine der beiden Gitterstrukturen derart zu gestalten. Fig. 3 zeigt eine entsprechende Schnittdarstellung durch das Sicherheitselement 1, wobei wiederum eine optionale Verdrehung der beiden Gitterstrukturen 2, 4 um den Winkel Φ möglich ist. Elemente, welche denen der Fig. 1 oder 2 funktionell oder strukturell entsprechen, sind mit denselben Bezugszeichen bezeichnet. Der Aufbau des Doppel-Liniengitters wird nachfolgend anhand der Gitterstruktur 2 erläutert. Für den Aufbau der Gitterstruktur 4 gilt sinngemäß dasselbe. Das Doppel-Liniengitter 2 besteht aus zwei Liniengitterstrukturen. In das Substrat 7 ist die eine erste Liniengitterstruktur 9 eingearbeitet, die in einer ersten Ebene angeordnet ist. Die erste Liniengitterstruktur 9 besteht aus ersten Gitterstegen 9 mit der Breite, die sich längs einer senkrecht zur Zeichenebene liegenden Längsrichtung erstrecken. Zwischen den ersten Gitterstegen 9 befinden sich erste Gitterspalte 11, die eine Weite haben. Die Dicke der ersten Gitterstege 9 (gemessen senkrecht zur Ebene) ist mit t₁ angegeben. In einer Höhe h₁ unter den ersten Gitterstegen 9 befindet sich in einer Ebene die zweite Liniengitterstruktur mit zweiten Gitterstegen 10. Diese haben eine Breite, die der Weite der ersten Gitterspalte 11 entspricht. Die zweite Liniengitterstruktur ist in der Ebene so gegenüber der ersten Liniengitterstruktur phasenverschoben, dass die zweiten Gitterstege 10 möglichst exakt (im Rahmen der Fertigungsgenauigkeit) unter den ersten Gitterspalten 11 zu liegen kommen. Gleichzeitig liegen zweite Gitterspalte 12, die zwischen den zweiten Gitterstegen 10 bestehen, unter den ersten Gitterstegen 9. Die Gitterstege 9 und 10 bilden keinen zusammenhängenden Film. In der schematischen Schnittdarstellung der Fig. 1 ist die Breite der ersten Gitterstege 9 gleich der Weite der ersten Gitterspalte 11. Somit beträgt in jeder Liniengitterstruktur der Füllfaktor 50 %. Dies ist jedoch nicht zwingend. Es kann eine beliebige Variation erfolgen.

Auch ist in der schematischen Schnittdarstellung der Fig. 3 die Dicke der ersten Gitterstege 9 gleich der Dicke der zweiten Gitterstege 10. Dies kommt einer einfacheren Herstellung zugute, ist jedoch nicht zwingend erforderlich.

Die Gitterstruktur 4 ist analog zur Gitterstruktur 2 aufgebaut. Allerdings müssen die geometrischen Parameter der Gitterstege und Gitterspalte nicht mit denen der ersten und zweiten Gitterstege sowie ersten und zweiten Gitterspalte übereinstimmen. Z.B. kann die Gitterstruktur 4 geometrisch abweichende dritte und vierte Gitterstege sowie dritte und vierte Gitterspalte aufweisen. Auch muss die Periode nicht dieselbe sein. Fig. 3 zeigt, dass die zweite Gitterstruktur 4 vollständig in das Substrat 8 eingebettet ist, wohingegen die erste Gitterstruktur 2 von verschiedenen Substraten überdeckt bzw. untergeben ist. Auch dies ist optional. Natürlich können die geometrischen Parameter aber auch identisch sein - bis auf den Azimutwinkel Φ.

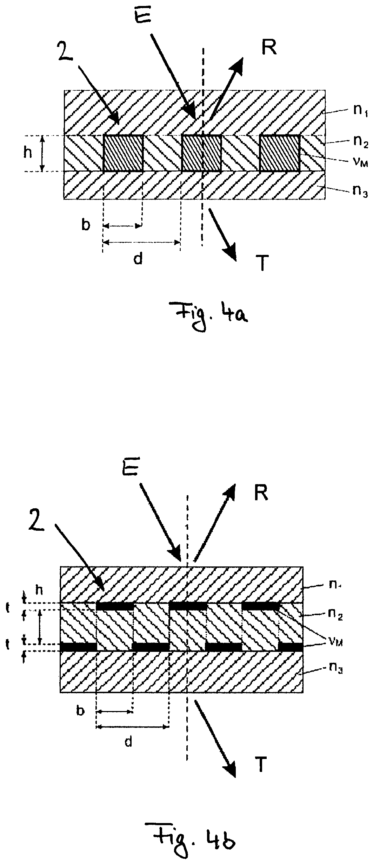

Für die Gitterstrukturen 4 kommen verschiedenste Varianten infrage. Die Fig. 4a bis 4d zeigen mögliche Ausführungsformen, die sowohl für die Gitterstruktur 2 (wie in den Fig. 4a bis 4d eingetragen) als auch für die Gitterstruktur 4 infrage kommen. Auch ist es möglich, die Varianten zu kombinieren, so dass jede der Gitterstrukturen gemäß Fig. 4a bis 4d beispielsweise als Gitterstruktur 2 verwendet werden kann und mit einer anderen der Gitterstrukturen gemäß Fig. 4a bis Fig. 4d für die Gitterstruktur 4 kombiniert werden kann. Umgekehrtes gilt natürlich gleichermaßen.

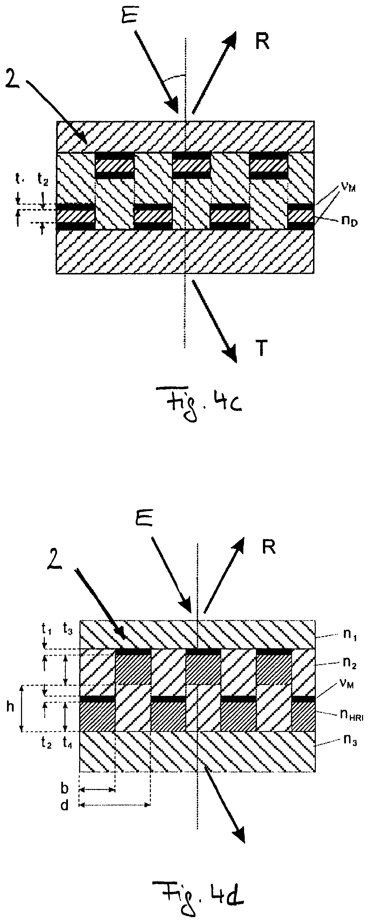

Fig. 4a zeigt ein Drahtgitter mit rechteckigem Querschnitt mit den Parametern Periode d, Breite b und Höhe h. Das Drahtgitter besteht aus Metall mit einer komplexen Brechzahl γM, und ist in ein Dielektrikum mit den Brechzahlen n₁, n₂ und n₃ eingebettet. Ein solches Drahtgitter hat im Resonanzbereich, die bei der Wellenlänge des einfallenden Lichtes in der Größenordnung der Gitterperiode bzw. oberhalb der Gitterperiode liegt, eine polarisierende Eigenschaft. Eine weitere Variante eines solchen polarisierenden Subwellenlängengitters ist in Fig. 4b dargestellt. Hier handelt es sich um die Anordnung von zwei z. B. metallischen Streifengittern der Periode d, welche sich im Abstand H zueinander befinden. Die Dicke des Streifengitters mit der Brechzahl γ_{M} ist mit t eingetragen. Dieses Gitter ist ebenfalls in ein Dielektrikum mit den Brechzahlen n₁, n₂ und n₃ eingebettet. Weitere Varianten zeigen die Fig. 4c und 4d. Sie unterscheiden sich von den vorherigen Varianten dadurch, dass die Streifengitter als Mehrschichtaufbau ausgeführt sind. In Fig. 4c ist ein Dreischichtaufbau gewählt, der beispielsweise aus der Abfolge Metall, hochbrechende Schicht und Metall gebildet ist. In Fig. 4d findet sich ein Zweischichtaufbau mit der Abfolge Metall und hochbrechende Schicht, wobei diese erheblich dicker ist als die Metallschicht. Neben Metall können die Drähte auch ein Dielektrikum, insbesondere ein hochbrechendes Material beinhalten. Die Brechzahlen der umgebenden Dielektrika n₁, n₂ und n₃ liegen typischerweise bei 1,5. Die Brechzahl des hochbrechenden Materials hingegen bei 1,8. Diese Werte sind exemplarisch.

Die Gitterstrukturen gemäß Fig. 4a bis 4d können genutzt werden, um Motive bzw. Bilder in Transmission zu erzeugen. Sie wirken in erster Linie als Transmissionselemente, welche eine Farbveränderung beim Kippen für unpolarisiertes Licht aufweisen. In einer vorteilhaften Anordnung ist das Gitter im Motiv um 90° verdreht gegenüber dem Gitter im Hintergrund angeordnet. Das Gitterprofil ist dagegen über den gesamten Bereich einheitlich. Bei dieser Anordnung ist bei senkrechter Betrachtung kein Motiv erkennbar. Beim Kippen erscheint das Motiv. Man erhält dabei eine Farbvertauschung beim Ost/West-Kippen im Vergleich zum Nord/Süd-Kippen oder beim Verdrehen um 90°. In einer weiteren Variante kann der Azimutwinkel in einzelnen Gitterbereichen variieren. Bei einer schrittweisen Variation des Winkels in benachbarten Bereichen können auch Laufeffekte beim Kippen erzeugt werden. Bei der Betrachtung solcher Gitteranordnungen unter polarisiertem Licht ist das Motiv bereits bei senkrechtem Lichteinfall sichtbar. Die Farben des Motivs ändern sich ebenfalls beim Kippen. Jedoch weisen diese Gitter keine Nicht-Reziprozität in der Transmission auf. Weiter sind metallische Sinusgitter bekannt, an denen für bestimmte Wellenlängen unter TM-Polarisation Oberflächenplasmon-Polaritonen angeregt werden. Diese resonante Anregung führt zu einer erhöhten Transmission für TM-polarisiertes Licht. Die Transmission für TE polarisiertes Licht wird unterdrückt.

Die Gitterstrukturen werden nun so kombiniert, dass eine Nicht-Reziprozität in der Transmission erreicht wird, da aufgrund des Azimutwinkels die Orientierung hinsichtlich TE- und TM-Moden polarisierter Beleuchtung und damit der Farbeffekt unterschiedlich ist, so dass unterschiedliche Motive auf Vorder- und Rückseite des Sicherheitselementes jeweils in Transmission erkennbar sind.

In allen Ausführungsformen sind die Gitterstrukturen 2, 4 so ausgestaltet, dass mindestens ein Teil des einfallenden sichtbaren Lichtspektrums in Transmission entsprechend der Gitterrichtung polarisiert wird, wobei die Polarisierung dispersiv ist, um einen Farbeffekt in Transmission auszubilden. Gitter mit sehr kleinen Perioden (z. B. unter 200 nm) zeigten zwar einen guten Polarisationskontrast, sind aber nicht oder für einen wahrzunehmenden Farbeffekt unzureichend dispersiv.

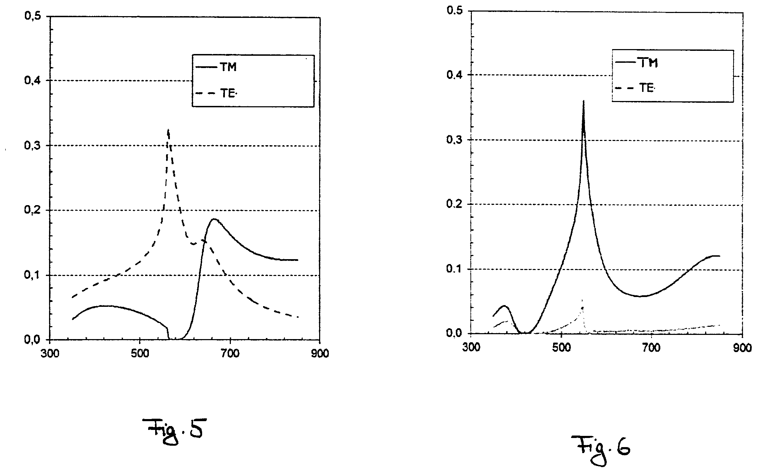

Die Fig. 5 und 6 zeigen die Polarisationseigenschaften der Gitterstrukturen 2, 4 im sichtbaren Bereich. Auf der Hochachse ist der Transmissionsgrad, und auf der Querachse die Wellenlänge in Nanometer aufgetragen. Die Kurven zeigen den Polarisationsgrad für TM-Polarisation und TE-Polarisation (abgekürzt als TM und TE). TM-Polarisation liegt vor, wenn der E-Vektor des einfallenden Lichtes senkrecht zum Verlauf der Gitterlinien schwingt. TE-Polarisation bezeichnet den Fall, dass der E-Vektor des einfallenden Lichtes parallel zu den Gitterstegen liegt. Fig. 5 zeigt die spektrale Transmission eines Sicherheitselementes mit Gitterstrukturen gemäß Fig. 2, wobei die Brechzahlen der Substrate 7, 8 und der Zwischenschicht 3 gleich sind, nämlich n = 1,52 betragen. Das Material der Gitterstege ist Aluminium. Die Periode beträgt 370 nm, die Höhe h₁ und h₂ beträgt 100 nm und die Gitterstruktur ist symmetrisch, d.h. die Breite jedes Gittersteges ist genau eine halbe Periode.

Das zwischen den Gitterstrukturen 2 und 4 liegende Material mit der Brechzahl n₃ ist so gewählt, dass es Licht beim Durchlassen vollständig oder mindestens zu 60% oder 70% depolarisiert. Durch die als zweite durchstrahlte Gitterstruktur fällt somit vollständig oder weitgehend depolarisierte Strahlung, so dass diese Gitterstruktur keinen Farbeffekt bewirkt. Dieser wird nur von der als erstes durchstrahlten Gitterstruktur erzeugt, auf die (noch) polarisierte Strahlung einfällt. Die so bewirkte Nicht-Reziprozität ist unabhängig von der Relativlage der Längsausrichtung der Gitterstrukturen 2 und 4.

Fig. 5 zeigt die Transmissionsfilterwirkung auf der Gitterstruktur 2 oder der Gitterstruktur 4 gegenüberliegenden Seite und bei senkrechtem Lichteinfall. Dreht man das Sicherheitselement um, hat man bei selber Ausgestaltung der Gitterstrukturen hinsichtlich Geometrie und Anordnung dieselben Polarisationsfiltereigenschaften.

Fig. 6 zeigt eine Darstellung ähnlich der Fig. 5, jedoch für die Gitterstruktur 2 oder 4 gemäß dem Aufbau der Fig. 3. Die Periode beträgt 360 nm, die Höhe h₁ = 220 nm, die Filmdicke t = 30 nm. Auch hier ist das Gitter symmetrisch, d.h. die Breite jedes Gittersteges 10 ist genau eine halbe Periode.

Es zeigt sich, dass die mittlere Transmission im sichtbaren Spektralbereich für beide Ausführungsformen bei TE-Polarisation deutlich höher ist als bei TM-Polarisation. Es besteht ein sehr deutlicher Intensitätskontrast zwischen den beiden Polarisationsrichtungen. Als Folge dieser dispersiven Polarisationsfilterung werden für die beiden Polarisationsrichtungen in Transmission unterschiedliche Farben sichtbar. Die Gitterstruktur gemäß Fig. 5 zeigt in Transmission für TM-Polarisation eine blaue und für TE-Polarisation eine gelbe Farbe. Gleiches ergibt sich aus dem Kurvenverlauf der Fig. 6. Mit abnehmender Gitterperiode steigt die Polarisationseigenschaft, jedoch nimmt die Ausbildung der Farbtöne je nach Ausgestaltung ab, da die spektrale Transmission für kleinere Gitterperioden eine zunehmend geringere Dispersion hat.

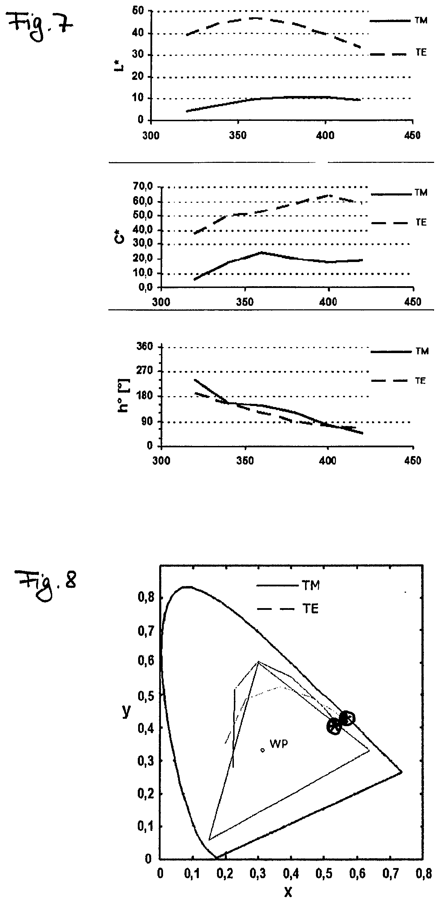

Fig. 7 zeigt die Farbeigenschaften der Gitterstrukturen im LCh-Farbraum bei senkrechtem Lichteinfall. Dazu zeigt Kurve die LCh-Farbwerte in drei Auftragungen. Diesen Farbwerten liegen eine Emissionskurve einer D65-Normlampe und die Empfindlichkeit des menschlichen Auges zugrunde. Die dabei erhaltenen Farbkoordinaten wurden in die Farbwerte LCh umgerechnet, wobei L* bekanntermaßen die Helligkeit, C* die Buntheit (entsprechend Farbsättigung) und h° der Farbton ist. Fig. 7 zeigt die entsprechenden Farbwerte für eine Gitterstruktur 2 oder 4 gemäß Fig. 3 als Funktion der Periode b bei einer Höhe h₁ von 190 nm, einer Dicke t₁ = t₂ = 30 nm und einem symmetrischen Gitter, also einer Breite der Gitterstege von einer halben Periode bei einem Einfallswinkel von 0°. Die Metallstreifen bestehen wieder aus Aluminium und sind in einem Dielektrikum mit einer Brechzahl von n = 1,52 eingebettet. Der Kontrast in der Helligkeit ist für diese Gitter unabhängig von ihrer Periode vorhanden. Die Buntheit (Chroma) nimmt für größere Perioden zu, während der Farbton abnimmt.

Dieser Effekt zeigt sich auch in der Darstellung im CIE-1931-Farbraum, die in Fig. 8 zu sehen ist. Die entsprechenden Kurven ergeben sich mit der Variation der Periode. Eine Periode von 420 nm ist mit einem umkreisten Stern gekennzeichnet. Der Weißpunkt ist wie üblich mit WP gekennzeichnet. Das Dreieck begrenzt den Farbbereich, der mit gängigen Bildschirmen dargestellt werden kann. Die x,y-Farbkoordinaten bei Variation der Periode sind als Trajektorien für die unterschiedlichen Polarisationen dargestellt. In diesem Diagramm ist der Farbkontrast für unterschiedliche Perioden zwischen den beiden Polarisationsrichtungen klar zu erkennen.

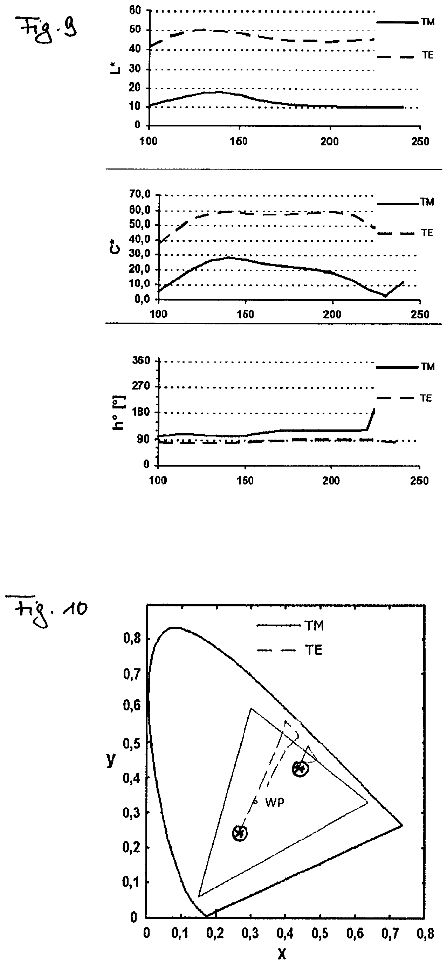

In einem weiteren Beispiel für eine Ausführungsform der Gitterstruktur 2 oder 4 gemäß Fig. 3 zeigt Fig. 9 die Abhängigkeit von der Modulationstiefe H, also der vertikalen Lücke zwischen den Gitterstegen im Doppel-Liniengitter bei senkrechtem Lichteinfall. Die Parameter entsprechen bis auf der Variation des Parameters h denen der Fig. 7. Die Periode beträgt 380 nm. Die Darstellung der entsprechenden Farbwerte im CIE-1931-Farbraum zeigt Fig. 10. Der Trajektorien-Endpunkt bei einem Wert von h = 240 nm ist wiederum mit einem umkreisten Stern gekennzeichnet. Es ist ein guter Farbkontrast zwischen den beiden Polarisationsrichtungen zu erkennen. Die Farbe der TM-Polarisation verschiebt sich für zunehmende Werte von h von Grün über Gelb zu Blau. Für die TE-Polarisation ist der Farbwert im Orangen und nahezu unabhängig von h.

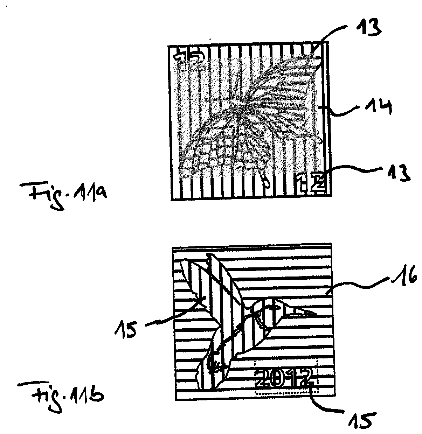

Um mit den Gitterstrukturen 2, 4 farbige Motive auszubilden, sind Bereichsflächen der jeweiligen Gitterstruktur 2, 4, die eine dispersive polarisierende und damit auch polarisationsfilternde Wirkung haben, hinsichtlich der Gitterrichtung unterschiedlich ausgeprägt. In einer bevorzugten Variante besitzt die gesamte Fläche, die mit der Gitterstruktur 2 bzw. 4 überdeckt ist, ein homogenes Gitterprofil. Jedoch ist von der Gitterstruktur 2 ein Motivbereich 13 gebildet, in dem die Längsrichtung der Gitterstege gegenüber einem Hintergrund 14 verdreht ist. Fig. 11a zeigt, dass der Motivbereich 13 der Gitterstruktur 2 z. B. das Bild eines Schmetterlings sowie der Zahl "12" enthält. Zwischen Motivbereich 13 und Hintergrund 14 stehen die Gitterlinien jeweils senkrecht zueinander. Dies hat den Vorteil, dass linear polarisiertes Licht, bei dem der E-Vektor im 45° Winkel zu den Gitterlinien schwenkt, isotrop transmittiert wird. Das Motiv ist bei dieser Konstellation für einen Betrachter nicht wahrnehmbar. Liegt der E-Vektor jedoch parallel oder senkrecht zu den Gitterlinien eines Bereiches (Motivbereich 13 oder Hintergrund 14), ist dieser mit maximalem Kontrast zu erkennen. Fig. 11b zeigt die entsprechende Strukturierung für die Gitterstruktur 4, hier in Form eines Kolibris und der Jahresangabe 2012. Auch hier sind die Gitterstrukturrichtungen zwischen Motivbereich 15 und Hintergrund 16 orthogonal zueinander. Allerdings liegen die Gitterstrukturen zwischen Motivbereich 15 und Motivbereich 13 um 90° zueinander gedreht. Gleiches gilt für den Hintergrund 14 und 16.

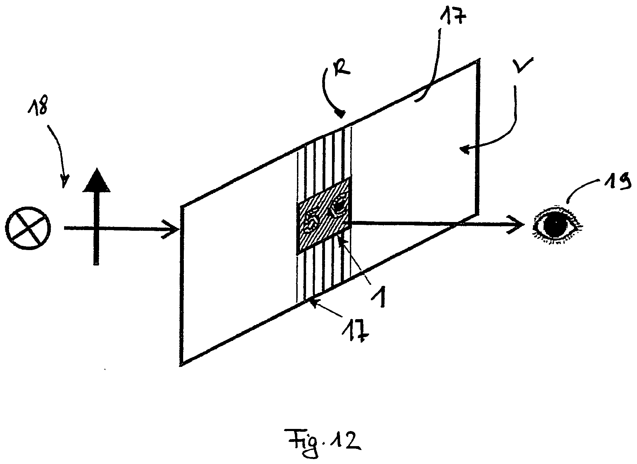

Da das Sicherheitsmerkmal bei linear polarisierter Beleuchtung von der Vorder- und Rückseite unterschiedliche Transmissionsbilder zeigt - es wirkt immer nur die der Lichtquelle zugewandte Gitterstruktur -, kann es besonders vorteilhaft in eine Banknote 17 integriert werden, und dort im Bereich eines Fensters. Fig. 12 zeigt diese Ausgestaltung. Da Banknoten auf der Vorder- und Rückseite unterschiedliche Designs enthalten, kann auf diese Weise ein in Transmission wirksames Sicherheitsmerkmal optimal in das Gesamtbild der Banknote integriert werden, indem passende Motive gewählt werden, welche in Durchsicht von der Vorder- oder Rückseite erkennbar sind. Da die Gitterstrukturen 2, 4 letztlich metallisierte Prägestrukturen sind, können sie besonders produktionstechnisch vorteilhaft mit herkömmlichen Hologramm-, Sägezahn- oder Subwellenlängenstrukturen kombiniert werden. Fig. 12 zeigt exemplarisch die Verwendung einer Hologrammstruktur 17. Bei Betrachtung im Durchlicht sieht ein Betrachter 19 bei Beleuchtung mit einer linear polarisierende Strahlung abgebenden Lichtquelle 18 von der Vorderseite V ein anderes Motiv, als bei gleicher Betrachtungsweise von der Rückseite R . Das Motiv ergänzt sich auf bevorzugte Weise mit einem Bild, das durch die Hologrammstruktur 17 auf der Vorderseite bzw. optional auch auf der Rückseite erzeugt wird.

Für die Herstellung des Sicherheitselementes und der Gitterstrukturen 2, 4 kommen Präge- und Druckverfahren, insbesondere photolithographische Verfahren infrage, wie sie im Stand der Technik bekannt sind, beispielsweise in den zu Beginn erläuterten Druckschriften, insbesondere der DE 10 2015 010191 A1 oder WO 2013/053 435 A1.

In einer bevorzugten Ausführungsform werden zuerst in getrennten Substraten die Gitterstrukturen 2 bzw. 4 erzeugt und dann zusammenkaschiert, wobei der Azimutwinkel erzeugt wird. Besonders bevorzugt liegt dann die Prägestruktur innen.

Die Gitterstege der Gitterstrukturen 2, 4 sind in allen Ausführungsformen aus einem hochbrechenden, dielektrischen oder halbmetallischen Material. Das hochbrechende Material ist von Dielektrika umgeben. In der Praxis unterscheiden sich diese Brechzahlen des umgebenden Materials kaum. Die Brechzahl n₂ des hochbrechenden Materials liegt über der (den) des umgebenden Materials, z.B. um mindestens 0,3 absolut.

Bei einem Gitter der Bauart gemäß Fig. 4b bestehend aus Aluminiumstegen, die in ein Dielektrikum mit n = 1,52 eingebettet sind, mit den Parametern ändert sich die spektrale Charakteristik bei einer Verkippung des Sicherheitselementes um 20° kaum. Die TM-Polarisation ist so gut wie unabhängig von der Verkippung des Einfallswinkels um 20°. Vorhandene kleine Abweichungen bei der TE-Polarisation werden von einem Betrachter bei Umgebungsbedingungen kaum wahrgenommen.

Diese Eigenschaft kann besonders vorteilhaft verwendet werden, denn bei Umgebungsbedingungen fällt stets Licht auch schräg auf das Sicherheitsmerkmal. Die winkelunabhängige Polarisation, die bei den erwähnten geringen Perioden unterhalb 300 nm erreicht wird, gewährleistet in diesem Fall die Unterdrückung des zweiten Motivs, das auf der dem Betrachter zugewandten Seite liegt.

### Bezugszeichenliste

- 1: Sicherheitselement
- 2, 4: Gitterstruktur
- 3: Zwischenschicht
- 7, 8: Substrat
- 9,10: Gittersteg
- 11,12: Gitterspalt
- 13,15: Motivbereich
- 14,16: Hintergrund
- 17: Banknote
- 18: Lichtquelle
- 19: Betrachter
- E: einfallende Strahlung
- T: transmittierte Strahlung
- V: Vorderseite
- R: Rückseite
- Φ: Azimutwinkel

## Patentansprüche

1. Sicherheitselement zur Herstellung von Wertdokumenten (17), wie Banknoten oder Schecks, das aufweist:
- ein dielektrisches Substrat (7, 8),
- eine erste, in einer ersten Ebene liegende Struktur (2), die in Transmissionsbetrachtung einen Polarisationseffekt hat,
- eine zweite, in einer zur ersten Ebene beabstandete zweiten Ebene liegende Struktur (4), die in Transmissionsbetrachtung einen weiteren oder denselben Polarisationseffekt hat, und
- ein zwischen der ersten und der zweiten Struktur (2, 4) angeordnetes, im sichtbaren Spektralbereich transparentes Material (3), das so ausgebildet ist, dass es durch eine der zwei Strukturen (2, 4) transmittiertes polarisiertes Licht derart modifiziert, dass es depolarisiert oder zirkular polarisiert auf die andere der zwei Strukturen (4, 2) trifft,
**dadurch gekennzeichnet, dass**
- die erste Struktur ausgebildet ist als erste Liniengitterstruktur (2), die in einer ersten Raumrichtung mit einer Periode nicht über 450 nm periodisch ist und in das Substrat (8) eingebettete Gitterstege aufweist, welche voneinander jeweils durch vom umgebenden Substrat (7) gebildete Gitterspalte getrennt sind, und
- die zweite Struktur ausgebildet ist als zweite Liniengitterstruktur (4), die in einer zweiten Raumrichtung mit einer Periode nicht über 450 nm periodisch ist und in das Substrat (7) eingebettete Gitterstege aufweist, welche durch vom umgebenden Substrat (8) gebildete Gitterspalte getrennt sind
- wobei jede Liniengitterstruktur (2, 4) ausgebildet ist, einen sich als wellenlängenabhängige Polarisationsfilterung auswirkenden Polarisationseffekt zu erzeugen, wobei die Wellenlängenabhängigkeit eine Farbfilterung polarisierter Beleuchtung erzeugt, welche von der Ausrichtung der Liniengitterstruktur abhängt.

2. Sicherheitselement nach Anspruch 1, wobei das Material (3) für eine Schwerpunktwellenlänge von 380 nm bis 780 nm eine Lambda/4-Phasenverschiebung erzeugt.

3. Sicherheitselement nach einem der obigen Ansprüche, wobei die erste Liniengitterstruktur (2) verschiedene erste Bereiche (13, 14) aufweist, in denen sich die erste Raumrichtung jeweils längs einer Längsrichtung erstreckt, wobei die Längsrichtungen der verschiedenen ersten Bereiche (13,14) unterschiedlich sind, so dass die verschiedenen ersten Bereiche (13,14) ein erstes, in Transmission unter linear polarisierter Beleuchtung farbig erkennbares erstes Motiv codieren.

4. Sicherheitselement nach einem der obigen Ansprüche, wobei die zweite Liniengitterstruktur (4) verschiedene zweite Bereiche (15, 16) aufweist, in denen sich die zweite Raumrichtung jeweils längs einer Längsrichtung erstreckt, wobei die Längsrichtungen der verschiedenen zweiten Bereiche (15, 16) unterschiedlich sind, so dass die verschiedenen zweiten Bereiche (15, 16) ein zweites, in Transmission unter linear polarisierter Beleuchtung farbig erkennbares zweites Motiv codieren.

5. Sicherheitselement nach einem der obigen Ansprüche, **dadurch gekennzeichnet, dass** die erste Liniengitterstruktur (2) als Doppelgitterstruktur ausgebildet ist und aufweist: eine erste Liniengitterteilstruktur aus mehreren längs einer ersten Längsrichtung verlaufenden und in einer ersten Ebene angeordneten ersten Gitterstegen (9) aus hochbrechendem Material und eine in das Substrat (7, 8) eingebettete zweite Liniengitterteilstruktur aus längs der ersten Längsrichtung verlaufenden zweiten Gitterstegen (10) aus hochbrechendem Material, die sich bezogen auf die erste Ebene über der ersten Liniengitterteilstruktur in einer parallelen zweiten Ebene befindet, wobei die ersten Gitterstege (9) jeweils eine Breite haben und in einem Abstand nebeneinanderliegen, so dass zwischen den ersten Gitterstegen (9) längs der ersten Längsrichtung verlaufende erste Gitterspalte (11) mit dem Abstand entsprechender Weite gebildet sind, wobei in Draufsicht auf die erste Ebene die zweiten Gitterstege (10) jeweils über den ersten Gitterspalten (11) liegen und zweite Gitterspalte (12), die zwischen den zweiten Gitterstegen (10) bestehen, über den ersten Gitterstegen (9) liegen.

6. Sicherheitselement nach einem der obigen Ansprüche, **dadurch gekennzeichnet, dass** die zweite Liniengitterstruktur (4) als Doppelgitterstruktur ausgebildet ist und aufweist: eine in das Substrat (7, 8) eingebettete dritte Liniengitterteilstruktur aus mehreren längs einer zweiten Längsrichtung verlaufenden und in einer dritten Ebene angeordneten dritten Gitterstegen aus hochbrechendem Material und eine in das Substrat (7, 8) eingebettete vierte Liniengitterteilstruktur aus längs der zweiten Längsrichtung verlaufenden vierten Gitterstegen aus hochbrechendem Material, die sich bezogen auf die vierte Ebene über der dritten Liniengitterteilstruktur in einer parallelen vierten Ebene befindet, wobei die dritten Gitterstege jeweils eine dritte Breite haben und in einem zweiten Abstand nebeneinanderliegen, so dass zwischen den dritten Gitterstegen längs der zweiten Längsrichtung verlaufende dritte Gitterspalte mit dem zweiten Abstand entsprechender vierter Breite gebildet sind, wobei in Draufsicht auf die vierte Ebene die vierten Gitterstege jeweils über den dritten Gitterspalten liegen und vierte Gitterspalte, die zwischen den vierten Gitterstegen bestehen, über den dritten Gitterstegen liegen.

7. Sicherheitselement nach einem der obigen Ansprüche, wobei die Gitterstege aus einemhochbrechenden Material gebildet sind, das eine Brechzahl hat, die um mindestens 0,3 höher ist, als die des umgebenden Substrats (1), und optional ausgewählt ist aus: ZnS, ZnO, ZnSe, SiNx, SiOx, Cr2O3, Nb2O5, Ta2O5, TixOx und ZrO2.

8. Sicherheitselement nach einem der obigen Ansprüche, wobei eine mittlere Helligkeit oder mittlere Buntheit in Transmissionsbetrachtung sich bei einem Kippen des Sicherheitselementes um mehr als 10% von dem entsprechenden Wert bei senkrechtem Lichtdurchtritt unterscheidet.

9. Sicherheitselement nach einem der obigen Ansprüche, wobei die erste und/oder die zweite Liniengitterstruktur (2; 4) mindestens zwei Bereiche (13, 14; 15, 16) aufweist, deren Perioden sich unterscheiden.

10. Sicherheitselement nach einem der obigen Ansprüche, wobei die Perioden 300 nm nicht überschreiten.

11. Sicherheitselement nach einem der obigen Ansprüche, das als Durchsichtselement, insbesondere als Fensterelement für ein Wertdokument (17) ausgebildet ist.

12. Wertdokument mit einem Sicherheitselement (1) nach einem der obigen Ansprüche, wobei das Wertdokument (17) ein Fenster oder einen zur Transmissionsbetrachtung vorgesehenen Bereich aufweist, das/den das Sicherheitselement (1) überdeckt.

13. Verfahren zum Herstellen eines Sicherheitselementes (1) für Wertdokumente (17), wie Banknoten oder Schecks, wobei
- ein dielektrisches Substrat (7, 8) bereitgestellt wird,
- eine erste, in einer ersten Ebene liegende Struktur (2ausgebildet wird, die in Transmissionsbetrachtung einen Polarisationseffekt erzeugt,
- eine zweite, in einer zur ersten Ebene beabstandete zweiten Ebene liegende, zweite Struktur (4) ausgebildet wird, die in Transmissionsbetrachtung einen weiteren oder denselben Polarisationseffekt hat,
- zwischen der ersten und der zweiten Struktur (2, 4) ein im sichtbaren Spektralbereich transparentes Material (3) angeordnet wird, das so ausgebildet ist, dass es durch eine der zwei Strukturen (2, 4) transmittiertes polarisiertes Licht derart modifiziert, dass es depolarisiert oder zirkular polarisiert auf die andere der zwei Strukturen (4, 2) trifft
**dadurch gekennzeichnet, dass**
- die erste Struktur ausgebildet wird als erste Liniengitterstruktur (2), die in einer ersten Raumrichtung mit einer Periode nicht über 450 nm periodisch ist und in das Substrat (7) eingebettete Gitterstege aufweist, welche voneinander jeweils durch vom umgebenden Substrat (7) gebildete Gitterspalte getrennt sind, und
- die zweite Struktur ausgebildet wird als zweite Liniengitterstruktur (4), die in einer zweiten Raumrichtung mit einer Periode nicht über 450 nm periodisch ist und in das Substrat (8) eingebettete Gitterstege aufweist, welche durch vom umgebenden Substrat (8) gebildete Gitterspalte getrennt sind,
- wobei jede Liniengitterstruktur (2, 4) ausgebildet wird, einen sich als wellenlängenabhängige Polarisationsfilterung auswirkenden Polarisationseffekt zu erzeugen, wobei die Wellenlängenabhängigkeit eine Farbfilterung polarisierter Beleuchtung erzeugt, welche von der Ausrichtung der Liniengitterstruktur abhängt.

## Claims

1. Security element for producing valuable documents (17) such as banknotes or cheques, comprising:
- a dielectric substrate (7, 8),
- a first structure (2) lying in a first plane and having a polarization effect in transmission observation,
- a second structure (4) lying in a second plane, which is spaced apart from the first plane, and having a further or the same polarization effect in transmission observation, and
- a material (3) which is transparent in the visible spectral range, is arranged between the first and second structures (2, 4) and is formed such that it modifies polarized light transmitted by one of the two structures (2, 4) in such a way that it impinges in depolarized or circularly polarized fashion on the other of the two structures (4, 2),
**characterized in that**
- the first structure is formed as a first line grating structure (2), which is periodic with a period of not more than 450 nm in a first spatial direction and comprises grating webs embedded in the substrate (8) and separated from one another in each case by grating gaps formed from the surrounding substrate (7), and
- the second structure is formed as a second line grating structure (4), which is periodic with a period of not more than 450 nm in a second spatial direction and comprises grating webs embedded in the substrate (7) and separated by grating gaps formed from the surrounding substrate (8),
- wherein each line grating structure (2, 4) is designed to produce a polarization effect manifested as wavelength-dependent polarization filtering, wherein the wavelength dependence produces a colour filtering of polarized illumination which is dependent on the orientation of the line grating structure.

2. Security element according to Claim 1, wherein the material (3) produces a lambda/4 phase shift for a centroid wavelength of 380 nm to 780 nm.

3. Security element according to either of the preceding claims, wherein the first line grating structure (2) comprises different first regions (13, 14) in which the first spatial direction extends in each case along a longitudinal direction, wherein the longitudinal directions of the different first regions (13, 14) are different, such that the different first regions (13, 14) encode a first motif, which first motif is discernible in colour in transmission under linearly polarized illumination.

4. Security element according to any of the preceding claims, wherein the second line grating structure (4) comprises different second regions (15, 16) in which the second spatial direction extends in each case along a longitudinal direction, wherein the longitudinal directions of the different second regions (15, 16) are different, such that the different second regions (15, 16) encode a second motif, which second motif is discernible in colour in transmission under linearly polarized illumination.

5. Security element according to any of the preceding claims, **characterized in that** the first line grating structure (2) is formed as a double grating structure and comprises: a first line grating substructure composed of a plurality of first grating webs (9) composed of high refractive index material, which run along a first longitudinal direction and are arranged in a first plane, and a second line grating substructure embedded in the substrate (7, 8) and composed of second grating webs (10) composed of high refractive index material, which run along the first longitudinal direction, said second line grating substructure being located, relative to the first plane, above the first line grating substructure in a parallel second plane, wherein the first grating webs (9) each have a width and are situated next to one another with a spacing, such that first grating gaps (11) running along the first longitudinal direction with a clearance corresponding to the spacing are formed between the first grating webs (9), wherein, in a plan view of the first plane, the second grating webs (10) are respectively located above the first grating gaps (11), and second grating gaps (12) existing between the second grating webs (10) are located above the first grating webs (9).

6. Security element according to any of the preceding claims, **characterized in that** the second line grating structure (4) is formed as a double grating structure and comprises: a third line grating substructure embedded in the substrate (7, 8) and composed of a plurality of third grating webs composed of high refractive index material, which run along a second longitudinal direction and are arranged in a third plane, and a fourth line grating substructure embedded in the substrate (7, 8) and composed of fourth grating webs composed of high refractive index material, which run along the second longitudinal direction, said fourth line grating substructure being located, relative to the fourth plane, above the third line grating substructure in a parallel fourth plane, wherein the third grating webs each have a third width and are situated next to one another with a second spacing, such that third grating gaps running along the second longitudinal direction with a fourth width corresponding to the second spacing are formed between the third grating webs, wherein, in a plan view of the fourth plane, the fourth grating webs are respectively located above the third grating gaps, and fourth grating gaps existing between the fourth grating webs are located above the third grating webs.

7. Security element according to any of the preceding claims, wherein the grating webs are formed from a high refractive index material having a refractive index that is higher by at least 0.3 than that of the surrounding substrate (1), and is optionally selected from: ZnS, ZnO, ZnSe, SiNx, SiOx, Cr2O3, Nb2O5, Ta2O5, TixOx and ZrO2.

8. Security element according to any of the preceding claims, wherein a mean brightness or mean chroma in transmission observation, during tilting of the security element, differs by more than 10% from the corresponding value during perpendicular light passage.

9. Security element according to any of the preceding claims, wherein the first and/or the second line grating structure (2; 4) comprise(s) at least two regions (13, 14; 15, 16) whose periods differ.

10. Security element according to any of the preceding claims, wherein the periods do not exceed 300 nm.

11. Security element according to any of the preceding claims, which is formed as a see-through element, in particular as a window element for a valuable document (17).

12. Valuable document having a security element (1) according to any of the preceding claims, wherein the valuable document (17) comprises a window or a region provided for transmission observation, which window or which region is covered by the security element (1).

13. Method for producing a security element (1) for valuable documents (17) such as banknotes or cheques, wherein
- a dielectric substrate (7, 8) is provided,
- a first structure (2) lying in a first plane and producing a polarization effect in transmission observation is formed,
- a second structure (4) lying in a second plane, which is spaced apart from the first plane, and having a further or the same polarization effect in transmission observation is formed,
- a material (3) which is transparent in the visible spectral range is arranged between the first and second structures (2, 4) and is formed such that it modifies polarized light transmitted by one of the two structures (2, 4) in such a way that it impinges in depolarized or circularly polarized fashion on the other of the two structures (4, 2),
**characterized in that**
- the first structure is formed as a first line grating structure (2), which is periodic with a period of not more than 450 nm in a first spatial direction and comprises grating webs embedded in the substrate (7) and separated from one another in each case by grating gaps formed from the surrounding substrate (7), and
- the second structure is formed as a second line grating structure (4), which is periodic with a period of not more than 450 nm in a second spatial direction and comprises grating webs embedded in the substrate (8) and separated by grating gaps formed from the surrounding substrate (8),
- wherein each line grating structure (2, 4) is designed to produce a polarization effect manifested as wavelength-dependent polarization filtering, wherein the wavelength dependence produces a colour filtering of polarized illumination which is dependent on the orientation of the line grating structure.

## Revendications

1. Élément de sécurité permettant de produire des documents de valeur (17), tels que des billets de banque ou des chèques, comportant :
- un substrat diélectrique (7, 8),
- une première structure (2), située dans un premier plan, qui produit un effet de polarisation lors d'une observation en transmission,
- une deuxième structure (4), située dans un deuxième plan espacé du premier plan, qui produit un autre effet de polarisation ou le même effet de polarisation lors d'une observation en transmission, et
- un matériau (3) transparent dans le domaine spectral visible, disposé entre les première et deuxième structures (2, 4), lequel est réalisé de telle sorte qu'il modifie la lumière polarisée transmise à travers l'une des deux structures (2, 4) afin qu'elle arrive dépolarisée ou polarisée circulairement sur l'autre des deux structures (4, 2),
**caractérisé en ce que**
- la première structure est réalisée sous la forme d'une première structure de réseau de lignes (2), qui est périodique dans une première direction spatiale avec une période non supérieure à 450 nm et qui comporte des barres de réseau incorporées dans le substrat (8), lesquelles sont respectivement séparées les unes des autres par des intervalles de réseau formés par le substrat (7) environnant, et
- la deuxième structure est réalisée sous la forme d'une deuxième structure de réseau de lignes (4), qui est périodique dans une deuxième direction spatiale avec une période non supérieure à 450 nm et qui comporte des barres de réseau incorporées dans le substrat (7), lesquelles sont séparées par des intervalles de réseau formés par le substrat (8) environnant,
- chaque structure de réseau de lignes (2, 4) étant réalisée de façon à produire un effet de polarisation agissant en tant que filtrage de polarisation dépendant de la longueur d'onde, la dépendance à la longueur d'onde produisant un filtrage chromatique de l'éclairage polarisé qui dépend de l'orientation de la structure de réseau de lignes.

2. Élément de sécurité selon la revendication 1, dans lequel le matériau (3) produit un déphasage de lambda/4 pour une longueur d'onde centroïde de 380 nm à 780 nm.

3. Élément de sécurité selon l'une des revendications précédentes, dans lequel la première structure de réseau de lignes (2) présente différentes premières zones (13, 14) dans lesquelles la première direction spatiale s'étend respectivement le long d'une direction longitudinale, les directions longitudinales des différentes premières zones (13, 14) étant différentes, de sorte que les différentes premières zones (13, 14) codent un premier motif coloré reconnaissable en transmission sous un éclairage polarisé linéairement.

4. Élément de sécurité selon l'une des revendications précédentes, dans lequel la deuxième structure de réseau de lignes (4) comporte différentes deuxièmes zones (15, 16) dans lesquelles la deuxième direction spatiale s'étend respectivement le long d'une direction longitudinale, les directions longitudinales des différentes deuxièmes zones (15, 16) étant différentes, de sorte que les différentes deuxièmes zones (15, 16) codent un deuxième motif coloré reconnaissable en transmission sous un éclairage polarisé linéairement.

5. Élément de sécurité selon l'une des revendications précédentes, **caractérisé en ce que** la première structure de réseau de lignes (2) est réalisée sous la forme d'une structure de réseau double et comporte : une première sous-structure de réseau de lignes constituée de plusieurs premières barres de réseau (9) en matériau à fort indice de réfraction s'étendant le long d'une première direction longitudinale et disposées dans un premier plan, et une deuxième sous-structure de réseau de lignes incorporée dans le substrat (7, 8), constituée de deuxièmes barres de réseau (10) en matériau à fort indice de réfraction s'étendant le long de la première direction longitudinale, qui se trouve, par rapport au premier plan, au-dessus de la première sous-structure de réseau de lignes dans un deuxième plan parallèle, les premières barres de réseau (9) ayant respectivement une largeur et étant juxtaposées à une certaine distance les unes des autres, de telle sorte qu'entre les premières barres de réseau (9) sont formés des premiers intervalles de réseau (11) s'étendant le long de la première direction longitudinale et ayant une largeur correspondant à ladite distance, dans lequel, dans une vue de dessus du premier plan, les deuxièmes barres de réseau (10) se situent respectivement au-dessus des premiers intervalles de réseau (11) et les deuxièmes intervalles de réseau (12), qui sont présents entre les deuxièmes barres de réseau (10), se situent au-dessus des premières barres de réseau (9).

6. Élément de sécurité selon l'une des revendications précédentes, **caractérisé en ce que** la deuxième structure de réseau de lignes (4) est réalisée sous la forme d'une structure de réseau double et comporte : une troisième sous-structure de réseau de lignes incorporée dans le substrat (7, 8) et constituée de plusieurs troisièmes barres de réseau en matériau à fort indice de réfraction s'étendant le long d'une deuxième direction longitudinale et disposées dans un troisième plan, et une quatrième sous-structure de réseau de lignes incorporée dans le substrat (7, 8) et constituée de quatrièmes barres de réseau en matériau à fort indice de réfraction s'étendant le long de la deuxième direction longitudinale, qui se trouve, par rapport au quatrième plan, au-dessus de la troisième sous-structure de réseau de lignes dans un quatrième plan parallèle, les troisièmes barres de réseau ayant respectivement une troisième largeur et étant juxtaposées à une deuxième distance les unes des autres, de telle sorte qu'entre les troisièmes barres de réseau s'étendant le long de la deuxième direction longitudinale, des troisièmes intervalles de réseau sont formés avec une quatrième largeur correspondant à la deuxième distance, dans lequel, dans une vue de dessus du quatrième plan, les quatrièmes barres de réseau se situent respectivement au-dessus des troisièmes intervalles de réseau et les quatrièmes intervalles de réseau, qui sont présents entre les quatrièmes barres de réseau, se situent au-dessus des troisièmes barres de réseau.

7. Élément de sécurité selon l'une des revendications précédentes, dans lequel les barres de réseau sont constituées d'un matériau à fort indice de réfraction qui possède un indice de réfraction supérieur d'au moins 0,3 à celui du substrat environnant (1), et est facultativement choisi parmi : ZnS, ZnO, ZnSe, SiNx, SiOx, Cr2O3, Nb2O5, Ta2O5, TixOx et ZrO2.

8. Élément de sécurité selon l'une des revendications précédentes, dans lequel une luminosité moyenne ou une coloration moyenne lors d'une observation en transmission, lorsque l'élément de sécurité est renversé, diffère de plus de 10% de la valeur correspondante observée lors d'une traversée perpendiculaire de la lumière.

9. Élément de sécurité selon l'une des revendications précédentes, dans lequel la première et/ou la deuxième structure de réseau de lignes (2 ; 4) comporte au moins deux zones (13, 14 ; 15, 16) dont les périodes sont différentes.

10. Élément de sécurité selon l'une des revendications précédentes, dans lequel les périodes ne dépassent pas 300 nm.

11. Élément de sécurité selon l'une des revendications précédentes, qui est réalisé sous la forme d'un élément transparent, notamment d'un élément de fenêtre destiné à un document de valeur (17).

12. Document de valeur comprenant un élément de sécurité (1) selon l'une des revendications précédentes, dans lequel le document de valeur (17) comporte une fenêtre ou une zone prévue pour l'observation en transmission, qui recouvre l'élément de sécurité (1).

13. Procédé de production d'un élément de sécurité (1) pour documents de valeur (17), tels que des billets de banque ou des chèques, dans lequel
- il est prévu un substrat diélectrique (7, 8),
- une première structure (2) située dans un premier plan est réalisée et présente un effet de polarisation lors d'une observation transmission,
- une deuxième structure (4), située dans un deuxième plan espacé du premier plan est réalisée et produit un autre effet de polarisation ou le même effet de polarisation lors d'une observation en transmission,
- entre les première et deuxième structures (2, 4) est disposé un matériau (3) transparent dans le domaine spectral visible, lequel est réalisé de telle sorte qu'il modifie la lumière polarisée transmise à travers l'une des deux structures (2, 4) afin qu'elle arrive dépolarisée ou polarisée circulairement sur l'autre des deux structures (4, 2),
**caractérisé en ce que**
- la première structure est réalisée sous la forme d'une première structure de réseau de lignes (2), qui est périodique dans une première direction spatiale avec une période non supérieure à 450 nm et qui comporte des barres de réseau incorporées dans le substrat (7), lesquelles sont respectivement séparées les unes des autres par des intervalles de réseau formés par le substrat (7) environnant, et
- la deuxième structure est réalisée sous la forme d'une deuxième structure de réseau de lignes (4), qui est périodique dans une deuxième direction spatiale avec une période non supérieure à 450 nm et qui comporte des barres de réseau incorporées dans le substrat (8), lesquelles sont séparées par des intervalles de réseau formés par le substrat (8) environnant,
- chaque structure de réseau de lignes (2, 4) étant réalisée de façon à produire un effet de polarisation agissant en tant que filtrage de polarisation dépendant de la longueur d'onde, la dépendance à la longueur d'onde produisant un filtrage chromatique de l'éclairage polarisé qui dépend de l'orientation de la structure de réseau de lignes.
